# EUROPEAN PATENT APPLICATION

(11) **EP 3 318 472 A1**
(43) Date of publication of application: **09.05.2018**
(21) Application number: 16196933.2
(22) Date of filing: 02.11.2016
(51) Int. Cl.: B62D 25/16

(54) **OPTIMISED WHEEL ARCH LINER**

(71) Applicant: Autoneum Management AG, 8406 Winterthur (CH)
(72) Inventor: Hauenstein, Michael, 8408 Winterthur (CH); Huang, Yanyan, 8037 Zürich (CH); Reinhardt, Yvonne, 8057 Zürich (CH)

(57) **Abstract**

Wheel arch liner (2) for a vehicle comprising at least a structural porous fibrous layer extending longitudinal in a curved shape (24,30) with a front end (8) and a rear end (7) wherein the porous fibrous layer is at least partly corrugated wherein the corrugations comprises alternating grooves (11) and ridges (10) and wherein at least the ridges (10) are situated at the inner side (9) of the curve shaped porous fibrous layer and wherein the grooves (11) and ridges (10) extend longitudinal transversal to the longitudinal curved shape (24,30).

## Description

### Technical Field

The invention is related to a wheel arch outer liner or cladding for a vehicle, in particular a rear wheel arch liner, and a method of producing such wheel arch liner.

### Background Art

Wheel arch liners, also called outer wheel arch liners, and in particularly rear outer wheel arch liners are needed to reduce noise generated mainly by the wheel on the road. The lining is therefore situated in the wheel arch of the vehicle, such as a car.

Current state of the art outer wheel arch liners are made of for instance injected moulded plastic, and may be combined with loose felt layers to increase the acoustic performance or are made of a fibrous carrier layer with smooth surface.

Although the use of fibrous nonwoven materials as a carrier may have improved acoustic properties compared to carrier made of plastic, they have some major drawbacks. During driving of the vehicle on wet roads the wheel will spray liquids, such as water, and dirt against the wheel arch liner with some force as a result of the centrifugal force generated by the movement of the wheel. Any porous material might therefore clog up its pores losing, or at least reducing, its noise absorbing properties and in addition will increase weight due to the take up of soiled liquids such as water as well as dirt.

It is known in the art to reduce this effect by using additional water-repellent layers, such as un-perforated or micro perforated foils or hydrophobic covering fabrics. However this adds not only complexity to the production process and cost to the final product but also reduces the noise absorbing properties. These surface treatments might have in addition the problem that they might not impregnate the whole depth of the fibrous material. The use of thin materials like scrims or films have the additional disadvantage that they may be torn apart or even destroyed by the impact of dirt or stone chipping during driving.

Wheel arch liners are formed to follow the shape of the outer wheel housing of vehicles and are therefore formed as 3-dimensional structural parts. These parts need to be structural in the sense of being able to mostly keep their shape when mounted on the vehicle, such as a car, without showing too much deflection, in particular sagging, during use and/or over the lifetime of the vehicle.

The structural stiffness for wheel arch liners can be impaired by the harsh conditions these parts meet during their lifetime of use on the vehicle. They can be subjected to stone chipping, dirt, hot, cold and/or wet weather conditions. In addition they might be subjected to high pressure water hosing during cleaning.

The absorption of dirt and liquids such as water, oil, sand etc., may increase the weight of the wheel arch liner and may cause the part changing form and or stiffness which might be compensated with the number of mounting points to mount the wheel arch liner to the vehicle. An increase of mounting points including means for mounting will add to the overall cost and weight of the wheel arch liner and will increase complexity of production and mounting.

There is therefore a need for light weight solutions for wheel arch liners with reduced liquid and dirt absorption properties, maintaining noise absorption performance.

### Summary of the invention

The object of the invention is achieved by the wheel arch liner according to claim 1, in particular by a wheel arch liner having at least a structural porous fibrous layer extending longitudinal in a curved shape with a front end and a rear end, this fibrous layer being at least partly corrugated with ridges situated at the inner side of the curve shaped fibrous layer and extending longitudinal transversal to the longitudinal curved shape.

The longitudinal curved shape is the shape of the fibrous layer in the main longitudinal direction and consequently also the main shape of the wheel arch liner.

Surprisingly by creating corrugations with ridges in a fibrous layer the dirt and liquid sprayed by the wheel towards and impacting the surface of the wheel arch liner can be diverted creating areas on the surface that are minimally impacted by the spray.

Another unexpected result is that by creating corrugations with ridges in the fibrous layer also the spray of dirt and liquid via the wheel arch liner to the back and the side of the vehicle was diminished. A flat surfaced wheel arch liner might increase the speed of the liquid and dirt running over the surface creating a larger spray of liquid and dirt beside and behind the wheel, spraying objects alongside the wheel and behind the wheel. By introducing corrugations with ridges according to the invention this spray can be diminished.

It was a general belief that it is beneficial to drain off the liquid and dirt as quick as possible in order to reduce the dirt and liquid absorption of the wheel arch liner. Surprisingly, it is mainly the dirt and liquid's impact force on a porous layer, as a result of the centrifugal force generated by the movement of the wheel, which is determining the degree of dirt and liquid absorption of a wheel arch liner with porous layers facing the wheel. It is therefore more important to reduce the energy of the impacting dirt and liquid and then drain away the liquid and dirt.

Wheel arch liner made of fibrous material may be able to absorb noise over its entire surface; however as soon as the surface is impacted by liquid and dirt the acoustic performance will be diminished at the areas impacted. The corrugations with ridges create shadow areas where the spray of liquid and dirt cannot normally directly impact. These shadow areas are therefore maintaining the acoustic ability, while the opposite sides of the corrugations are blocking the liquid and dirt.

The corrugations according to the invention comprise impact sides reducing the impact energy of the liquid and dirt and acoustic sides not directly impacted by the dirt and liquid. In addition the corrugations form chutes for draining the liquid and dirt away. Therefore only a partial area of the wheel arch liner surface is subject to the main impact of the liquid and dirt and no longer the full surface facing the wheel.

The impact side and acoustic side extend longitudinal in a transversal direction to the longitudinal direction of the fibrous layer's curved shape.

The impact sides are facing the rear end of the fibrous layer following an axis of the longitudinal curved shape from the front end to the rear end of the fibrous layer.

The fibrous layer is preferably at least partly facing a wheel when mounted on a vehicle and the outer side of the wheel arch liner is facing the wheel arch and the inner side is facing the wheel.

The rear end of the fibrous layer is the end situated behind the wheel towards the rear of the vehicle and the front end is situated in front of the wheel towards the front of the vehicle, when the wheel arch liner is mounted on the vehicle.

The impact sides are forming impact areas where most of the dirt and liquid is impacting the fibrous layer when the liquid and dirt is accelerated by the wheel towards the wheel arch liner, when driving the vehicle in forward direction.

The energy and speed of the dirt and liquid is heavily reduced after impacting the impact sides and the dirt and liquid runs after the impact, by gravity and supported by the airflow generation by the wheel movement, along the corrugations transversal towards the side edge of the wheel arch liner. The acoustic side and impact side, as well as the grooves and ridges may extend longitudinal in a perpendicular direction to the longitudinal direction of the fibrous layer's curved shape but is preferable in an angle to the longitudinal direction of the fibrous layer's curved shape. The dirt and liquid is then drained more efficiently towards the side of the wheel arch liner, away from the wheel in order to not drop back onto the wheel and then again being thrown back by centrifugal force onto the wheel arch liner. It is therefore desirable that the fibrous layer and preferably also the corrugations, is wider than the wheel of the vehicle or at least the same width as the wheel.

As a result of the corrugation of the fibrous layer the impact sides are protecting the acoustic sides from most of the dirt and liquid impact and the acoustic sides will therefore absorb less dirt and liquid than the impact sides, preserving the acoustic properties of the acoustic sides. The impact sides may however also contribute to the acoustic performance of the wheel arch liner.

The corrugated fibrous layer also has a larger surface area compared to an un-corrugated layer and consequently the corrugated fibrous layer has a larger area contributing to the noise absorption resulting in an overall better noise absorption performance.

Preferably the grooves and ridges extend longitudinal transversal to the longitudinal curved shape in a U-shape or V-shape. The U-shape or V-shape enhances the drainage of the dirt and liquid sidewards.

Preferably the acoustic side and impact side extend parallel or at least substantially parallel to the grooves and ridges which mean also longitudinal transversal to the longitudinal curved shape in a U-shape or V-shape. The U-shape or V-shape should not be understood as perfectly shaped U-shape or V-shape but also as substantially U-shaped or V-shaped or curved U-shape or curved V-shape or similar shapes.

Each U-shape or V-shape comprises a tip wherein the tip is directed towards the apex of the longitudinal curved shape following an axis of the longitudinal curved shape. The apex is defined as the highest point of the wheel arch liner when the wheel arch liner is mounted on the vehicle.

When the wheel arch liner is mounted on the vehicle, the tips of the U-shaped or V-shaped corrugations situated close to the rear end and front end of the fibrous layer is directed in a vertical or substantially vertical direction and the tips of the U-shaped or V-shaped corrugations situated close to the apex of the wheel arch liner is directed in a substantially horizontal or horizontal direction.

The corrugations may be less effective at the apex of the wheel arch liner since the gravity may pull the dirt and liquid back from the wheel arch liner to the wheel.

In order to improve the effectiveness of the corrugations, in particular close to the apex of the wheel arch liner, it may be beneficial to vary the height of the corrugation.

The height of the corrugations may vary over the longitudinal transversal direction to the longitudinal curved shape of the fibrous layer.

The height of the corrugations may be lower at the tip of the U-shape or V-shape compared to the height of the part of the corrugation extending away from the tip longitudinal transversal to the longitudinal curved shape of the fibrous layer. The flow of the air, liquid and dirt close to the corrugations will, as a result of the reduced height at the tip, enhance the drainage of the dirt and liquid sidewards at the area of the wheel arch liner close to the apex.

The shape of the cross section of the corrugations may be designed to reduce liquid and dirt absorption and maintain or increase the noise absorption properties of the wheel arch liner by designing the cross section lengths and angles of the impact side and acoustic side of the corrugation.

Preferably each corrugation has an asymmetric cross section.

Preferably each corrugation comprises an impact side and an acoustic side and wherein the sides extend longitudinal transversal to the longitudinal curved shape and wherein the impact sides are facing the rear end following an axis of the longitudinal curved shape from the front end to the rear end and wherein the cross section length of the impact side is shorter than cross section length of the acoustic side.

The acoustic sides may be further optimised by for example increasing curvature of the acoustic sides and thereby increasing the length of the acoustic sides.

Longer and or wider acoustic sides create a larger noise absorbing area and better acoustic properties of the wheel arch liner. The impact side should however be long or high enough to protect the acoustic side from the liquid and dirt impact.

Preferably the angle between the acoustic side and a straight line between the groove at the impact side and the groove at the acoustic side is smaller than the angle between impact side and the straight line. The straight line is an imaginary line allowing an estimate of the angles.

Preferably the impact side has an angle between 65 and 90 degrees, preferable between 70 and 80 degrees.

Preferably the wheel arch liner is formed by one single fibrous layer reducing the complexity of the wheel arch liner, however additional layers may be laminated on the wheel arch liner.

The wheel arch liner has normally also a curved shape in the transversal direction and the corrugations may therefore be curved in the longitudinal transversal direction of the fibrous layer.

In order to reduce the liquid and dirt absorption of the impact sides, preferably the fibrous layer has a higher density (kg/m³) at the impact sides compared to the fibrous layer at the acoustic sides.

Preferably the thickness of the impact side is compressed to a thinner thickness, during the production of the wheel arch liner, creating impact sides with higher density and higher airflow resistance compared to the less compressed acoustic side, resulting in lower liquid and dirt absorption of the impact side.

The thickness and area weight of the porous fibrous layer should be selected such that the fibrous layer is acting as the main carrying layer such as a structural layer being able to mostly keep the shape when mounted on the vehicle. The corrugations will also enhance the overall stiffness of the fibrous layer allowing a thinner fibrous layer still maintaining the overall stiffness.

The thickness should also be selected such that the liquid and dirt absorption and noise absorption performance requirements are reached. For a given area weight, the more the fibrous is compressed during production of the wheel arch liner, the lower the liquid and dirt absorption might be. However a thicker fibrous layer has a better noise absorption performance. It may therefore, as mentioned above, be advantageously to have the impact side more compressed than the acoustic side.

Preferably the fibrous layer has a thickness between 1 and 8 mm, preferably between 1.2 and 5 mm, preferably between 1.5 and 4.5 mm.

The area weight is also selected to reach the stiffness requirements of the fibrous layer, but also to reach noise absorption requirements and weight targets.

Preferably the fibrous layer has an area weight between 200 and 1700 g.m ⁻², preferably between 400 and 1500 g.m⁻², preferably between 500 and 1300g.m⁻².

The area weight of the fibrous layer is the average area weight of the over the surface of the fibrous layer fibrous layer and can be measured in a flat or flattened condition and not including the shape of the fibrous layer. Local differences may occur due to the moulding process of the wheel arch liner.

The fibrous layer is porous and has a noise absorption that is, as mentioned, depending on the area weight and thickness but also depending on the air flow resistance (AFR). The wheel arch liner preferably has at least a fibrous layer where at least the acoustic sides has an air flow resistance between 100 to 5000 Ns/m³, preferably between 200 to 3000 Ns/m³, preferably between 500 to 2500 Ns/m³, measured according to current ISO 9053, using the direct airflow method (method A).

The height and pitch of the corrugations may be designed depending on the space available and the design guidelines given by the vehicle manufacturer. The height and pitch will also determine the overall stiffness of the wheel arch liner for a fibrous layer with a given area weight and thickness.

Preferably the height and pitch is determined as a relation of the radius of the wheel and the radius from the centre of the wheel to the vehicles wheel arch.

Preferable the height is between 5 mm and 70 mm, preferably between 10 mm and 50 mm, preferably between 15 mm and 30 mm.

Preferable the pitch is between 5 mm and 80 mm, preferably between 10 mm and 50 mm, preferably between 20 mm and 40 mm.

The wheel arch liner may comprise at least one additional layer for instance a nonwoven scrim layer, superposed and laminated to the fibrous layer, to further optimise the properties or as a processing aid preventing the fibrous layer from sticking to the mould during moulding of the part.

The wheel arch liner according to the invention may comprise further layers situated on the inner or outer side of the wheel arch liner, such as a film or foil. The film or foil is preferably at least partly perforated to maintain the acoustic performance of the fibrous layer.

Preferably the film or foil is made of thermoplastic polymer such as, thermoplastic olefin, Low-density polyethylene, thermoplastic polyurethane, polyester, copolyester, polyamide, polyethylene or similar and the film or foil may be impervious or perforated. The foil or film is preferably laminated to the fibrous layer during moulding of the wheel arch liner.

The wheel arch liner according to the invention may comprise corrugations that are filled with a material on the outer side of the fibrous layer. The fibrous layer may be shaped such that the corrugations are only at the inner side of the fibrous layer and the outer side is substantially even or flat without corrugations following the curved shape of the wheel arch liner.

Preferably the porous fibrous layer is made of a fibrous material comprising filler filaments and or fibres and a binder preferably in the form of thermoplastic binder.

More preferably the porous fibrous layer according to the invention comprises bicomponent filaments or cut bicomponent filaments, also known as staple fibres, made from two polymers distributed over the entire length of the filaments. A bicomponent filament or fibre with a sheath/core configuration consists of a sheath made from polymers with a low melting point around a core made of polymers with a high melting point.

During production of the porous fibrous layer the second polymer forming the sheath is softening and or melting, forming the binding of the core filaments or fibres and or filler filament and or filler fibres.

Alternatively the porous fibrous layer may be made of high melt polymer filaments or fibres and low melt polymer filaments or fibres wherein during production of the porous fibrous layer the low melt filaments or fibres are softening and or melting, forming the binding of the high melt filaments or fibres.

The high melt filaments or fibres and the core of the bicomponent filaments or fibres may be referred to as filler filaments or fibres.

Preferably the filler filaments or fibres are at least one of mineral fibres or thermoplastic fibres selected from the group consisting of polyester fibres, preferably polyethylene-terephthalate (PET), polybutylene terephthalate (PBT), glass fibres and basalt fibres, or the fibres or filaments are a mixture of such fibres or filaments.

Preferably the thermoplastic binder, e.g. the sheath polymer or low melt filaments or fibres are selected from the group consisting of a copolymer of polyester, preferably a copolymer of polyethylene-terephthalate (coPET), or a Copolymer of polybutylene terephthalate (PBT), a polypropylene and a polyamide, preferably polyamide-6 or polyamide-66.

The porous fibrous layer may also comprise a mix of filaments and fibres and or bicomponent filaments or fibres and or high and low melt polymer filaments or fibres.

Any material used may be made of virgin or recycled material or a mix thereof.

In an embodiment of the invention the fibrous layer comprises thermoplastic bicomponent filaments, consisting of a first polymer forming the core of the bicomponent filament and a second polymer forming the sheath of the bicomponent filament, wherein the sheath of the bicomponent filament comprises at least one repellent additive of Fluorinated or per-fluorinated short chain molecules with a chain length in the range of C4-C14.

In a preferred embodiment of the invention the fibres or filaments are made by polyester rendering in a mono material product. Such a product would be easy to recycle. For instance the material may be melted again and formed in polyester resin to be reused for all types of polyester products including the product according to the invention, or directly shredded into pieces that can be used as raw material for the same, similar or other products.

The wheel arch liner can be produced according to the standard production methods known in the art with at least a moulding step. The material or materials may be heated in advance to the moulding or in the same step as the moulding to obtain the consolidation of the porous fibrous layer. During the moulding step the fibrous layer is compressed and consolidated to form the shape of the wheel arch liner.

The corrugations in the fibrous layer is preferably created during moulding and preferably the fibrous layer is compressed to the correct thickness, e.g. different thickness of the impact sides and the acoustic sides are created during moulding.

During production the fibrous layer is consolidated by heating thereby softening and or melting the sheath polymer and or binding polymer forming binding points between the filler and or core fibres and or filaments.

When using an additive in the sheath polymer the repellent additive is redistributed forming a liquid repellent consolidated fibrous layer.

As the wheel arch liner is a curved product that is difficult to stack, and occupies a large volume in comparison to the weight of the part, it is preferred to add at least one hinge in the form of one or more fold lines in the part to be able to store the part substantially flat and form it in the arch covering part during the assembly on the vehicle e.g. the car.

The fibrous material is moulded to form the wheel outer liner and optionally fold lines can be integrated in the mould to enhance handling of the part after moulding, and during storage, transport and assembly. The folding line can be for instance arranged such that the liner can be moulded substantially flat and assembled in the proper 3 D shape after the moulding, or can be moulded substantially in its final form, but can be stored flattened to restrict the space needed during storage and transport.

The at least one hinge or fold line can be made during moulding of the wheel arch liner, by compressing the fibrous layer more along a line creating a folding line. The fold line or lines are formed over the width of the arch so that the part can be folded open. More than one fold lines might be advantageous. Whereby preferably each of those folding lines is formed by two indentations, one on each side of the fibrous layer, formed by further compressing locally the fibrous layer, preferably the indentations are placed at the same fold line with the deepest area of the indentations opposite of each other. Preferably the indentation on one site is deeper than on the other side.

Any range given should include the starting and end points as well as normal expected deviations in the measurements.

Further embodiments of the invention may be derived from the description also by combining the different embodiments and examples of the invention and may be also derived from the description of the embodiments shown in the figures. The figures are schematic pictures and are not necessarily in scale.

### Brief description of drawings

Figure 1 shows a schematic figure of a wheel arch liner.
Figure 2 shows a cross section of a schematic picture of a wheel arch liner according to the invention, mounted over a wheel.
Figure 3A and 3B shows schematic pictures of curved V-shaped corrugations with impact and acoustic sides, according to the invention.
Figure 4 shows a schematic cross section A-A' of corrugations with impact and acoustic sides, according to the invention.
Figure 5 shows a schematic cross section of corrugations with impact and acoustic sides, according to the invention.
Figure 6 shows a schematic figure of a wheel with a schematic figure of the wheel arch liner in the form of a fibrous layer with V-shaped corrugations wherein the tips of the V-shapes are directed towards the apex of the longitudinal curved shape wheel arch liner following an axis of the longitudinal curved shape.
Figure 7 shows an example of a wheel arch liner according to the invention with a hinge in the form of a folding line.

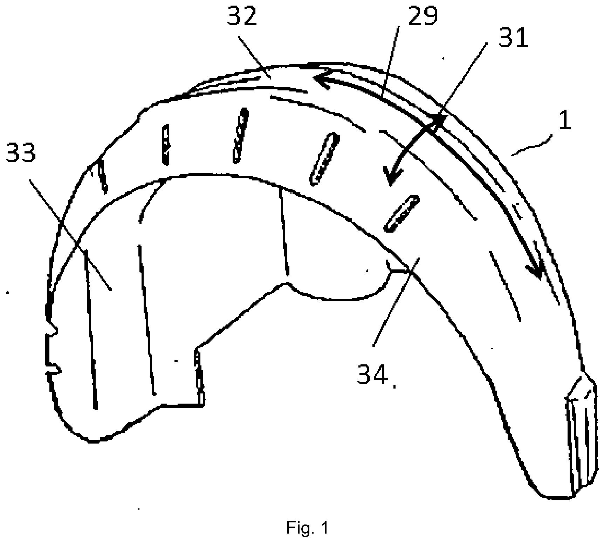

Figure 1 shows a wheel arch liner moulded in a curved shape to fit the wheel arch and may in addition to the longitudinal curved shape (29) also be curved in the transversal direction (31) to the longitudinal curved shape and well as comprise sides (34) in order to seal towards the wheel arch edge of the vehicle. The wheel arch liner has an outer side (32) directed to the wheel arch and an inner side (33) facing the wheel when mounted on a vehicle. The longitudinal curved shape (29) and the transversal direction (31) to the longitudinal curved shape is indicated in figure 1 with arrows.

According to the state of the art the inner side of a fibrous layer is substantially even or flat without corrugations following the curved shape of the wheel arch liner.

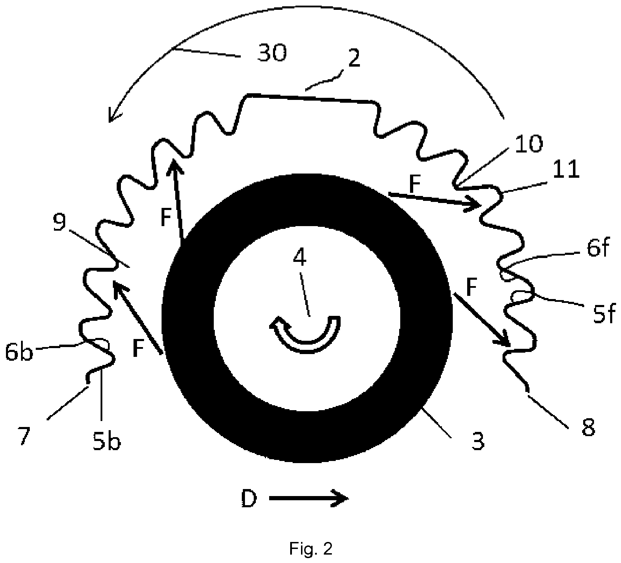

Figure 2 shows a cross section of a schematic picture of a wheel arch liner (2) according to the invention, mounted over a wheel, where D is the drive direction when driving the vehicle in forward direction and the corresponding wheel rotation direction (4). The wheel (3) may, when driving on wet roads, spray liquid and dirt against the wheel arch liner with some force as a result of the centrifugal force generated by the movement of the wheel. The wheel may spray liquid and dirt with a certain angle to the wheel arch liner, shown schematically with the arrow (F) and the angle depends, among other things, on the speed of the wheel.

The porous fibrous layer extend longitudinal in a curved shape (30) with a front end (8) and a rear end (7) with corrugations seen from the side of the wheel arch liner and the corrugations have alternating grooves (11) and ridges (10) and the ridges are situated at the inner side (9) of the curve shaped porous fibrous layer, facing the wheel. The impact sides (5b, 5f) are facing the rear end (7) following the axis (30) of the longitudinal curved shape (30) from the front end (8) to the rear end (7). The impact sides shadows the acoustic sides (6b, 6f) and therefore protect the acoustic sides from the liquid and dirt impact. Behind the wheel the impact sides (5b) are facing downwards and the acoustic sides (6b) are facing upwards since the flow of liquid and dirt is coming from below and in front of the wheel the impact sides (5f) are facing upwards and the acoustic sides (6f) are facing downwards since the flow of liquid and dirt is coming from above.

The corrugations may only cover a part of the fibrous layer, for example only behind the wheel or only in front of the wheel or only close to the apex of the fibrous layer or any combination thereof.

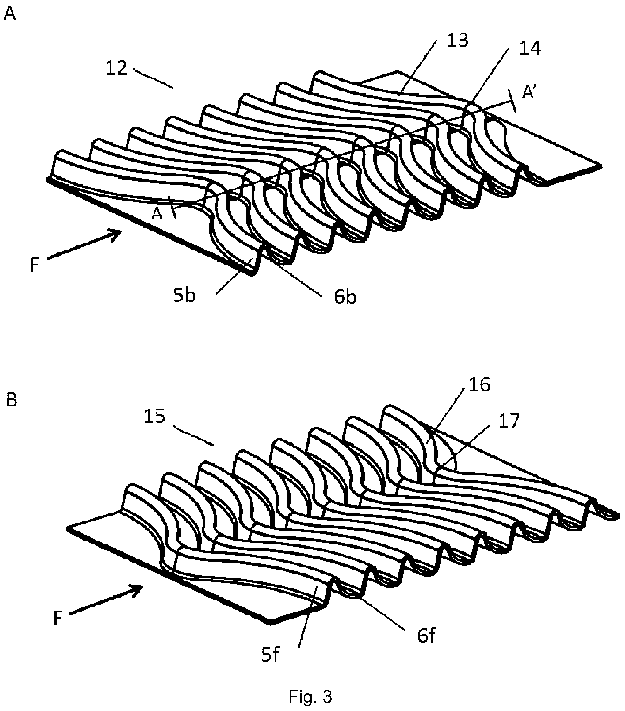

Figure 3A and 3B shows schematic pictures of examples of curved V-shaped (13, 16) corrugations according to the innovation. The corrugations are show as flat in the longitudinal transversal direction but the corrugations may be curved in the longitudinal transversal direction.

Figure 3A shows the V-Shaped corrugations for the area behind (12) the wheel and figure 3B shows the V-Shaped corrugations for the area in front (15) of the wheel.

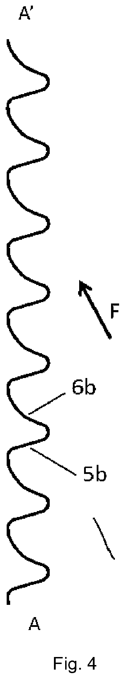

Figure 3A shows the V-Shaped (13) corrugations for the area behind (12) the wheel where the impact sides (5b) facing away from the direction of tip (14) of the V-shaped corrugation. The tip may be situated in the centre of the wheel arch liner or towards one side of the wheel arch liner. The spray (F) of liquid and dirt come from below, behind the wheel, when driving the vehicle in forward direction, and therefor the impact sides (5b) are facing downwards and the acoustic sides (6b) are facing upwards when the wheel arch liner is mounted on the vehicle. A-A' is indication the cross section shown in figure 4.

Figure 3B shows the V-Shaped (16) corrugations for the area in front (15) of the wheel where the impact sides (5f) facing the same direction as the tip (17) of the V-shaped corrugation. The spray (F) of liquid and dirt come from above, in front of the wheel, when driving the vehicle in forward direction, and therefor the impact sides (5f) are facing upwards and the acoustic sides (6f) are facing downwards when the wheel arch liner is mounted on the vehicle.

The impact sides (5b, 5f) will protect the acoustic sides (6b, 6f) from most of the impact of liquid and dirt. After the impact, the energy of the impacting liquid and dirt is heavily reduced and the liquid and dirt not absorbed is drained, by gravity and supported by the airflow generation be the wheel movement, to the sides of the wheel arch liner. The V-shape is enhancing the drainage to the sides of the wheel arch liner.

Figure 4 is showing cross section A-A' (18) of the corrugations shown in figure 3A. In this embodiment example the impact sides (5b) are shorter and steeper than the acoustic sides (6b). The sides may be straight or curved. Most preferred are rather straight impact sides and stronger curved acoustic sides creating a larger protected area increasing the acoustic performance. F is indication the general main liquid and dirt spray direction.

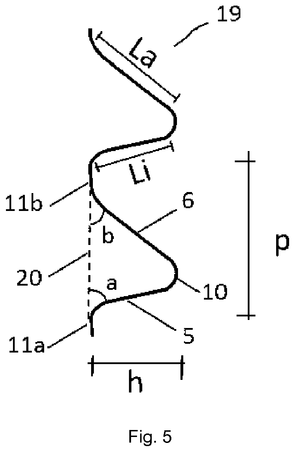

Figure 5 shows a schematic cross section of corrugations (19) according to the invention with impact sides (5) and acoustic sides (6). Figure 5 is showing how the impact side (5) and acoustic side (6) may be arranged in relation to each other. Preferably the corrugations are designed such that the angle (b) between the acoustic side (6) and a straight line (20) between the groove (11a) at the impact side (5) and the groove (11b) at the acoustic side (6), is smaller than the angle (a) between impact side and the straight line (20). The straight line (20) is an imaginary line allowing an estimate of the angles. The angles can be measured directly or by measuring the distance between the groove (11a) at the impact side (5) and the groove (11 b) at the acoustic side (6) as well as the acoustic side and the impact side, creating a triangle allowing estimation of the angles.

The length (Li) of the impact side is preferably shorter than the length (La) of the acoustic side.

Both the impact side and acoustic side may be slightly curved and the angles should then be estimated based on the average angle of the sides, e.g. taking an average straight line through the curved impact side and or an average straight line through the curved acoustic side.

The height (h) and pitch (p) of the corrugation may be varied according to the need and space available. Corrugation with a higher height will increase the impact area and give better protection to the acoustic sides.

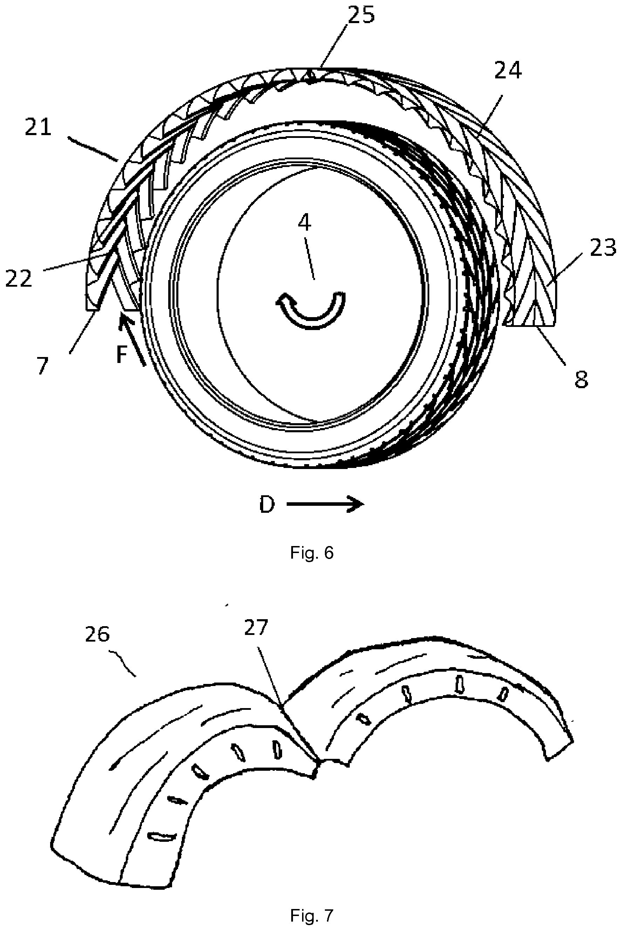

Figure 6 shows a schematic figure of a wheel and a schematic figure of the wheel arch liner (21) where D is indicating the drive direction of the vehicle and the corresponding wheel rotation direction (4) when driving in forward direction and the generated spray (F) of liquid and dirt when driving on wet roads. The rear end (7) of the wheel arch liner is situated behind the wheel and the front end (8) of the wheel arch liner is situated in front of the wheel. The corrugations in this example is V-shaped (22, 23) and the tip of each V-shape is directed towards the apex (25) of the longitudinal curved shape following an axis of the longitudinal curved shape (24). In this example the tips of the V-shape is situated in the centre or middle of the wheel arch liner but they may be situated towards one side of the wheel arch liner.

The tips of the U-shaped or V-shaped corrugations situated close to the rear end and front end of the fibrous layer is directed in a vertical or substantially vertical direction and the tips of the U-shaped or V-shaped corrugations situated close to the apex of the wheel arch liner is directed in a substantially horizontal or horizontal direction.

Figure 7 shows an example of a wheel arch liner (27) according to the invention with one hinge (27) in the form of a folding line. Figure 7 shows the wheel arch liner unfolded taking less space than when being fully curved.

## Claims

1. Wheel arch liner for a vehicle comprising at least a structural porous fibrous layer extending longitudinal in a curved shape (24, 30) with a front end (8) and a rear end (7) **characterised in that** the porous fibrous layer is at least partly corrugated wherein the corrugations comprises alternating grooves (11) and ridges (10) and wherein at least the ridges are situated at the inner side (9) of the curve shaped porous fibrous layer and wherein the grooves and ridges extend longitudinal transversal to the longitudinal curved shape.

2. Wheel arch liner according to claim 1 wherein the grooves and ridges extend longitudinal transversal to the longitudinal curved shape in a U-shape or V-shape (13, 16).

3. Wheel arch liner according to claim 2 wherein each U-shape or V-shape comprises a tip (14, 17) and wherein the tip is directed towards the apex of the longitudinal curved shape following an axis of the longitudinal curved shape.

4. Wheel arch liner according to any of the preceding claims wherein the height (30) of the corrugation is varying over the longitudinal transversal direction to the longitudinal curved shape.

5. Wheel arch liner according to any of the preceding claims wherein each corrugation has an asymmetric cross section.

6. Wheel arch liner according to claim 5 wherein the corrugation comprises an impact side (5b, 5f) and an acoustic side (6b, 6f) and wherein the sides extend longitudinal transversal to the longitudinal curved shape and wherein the impact sides are facing the rear end following an axis (24, 30) of the longitudinal curved shape from the front end to the rear end and wherein the angle (b) between the acoustic side and a straight line (20) between the groove (11 a) at the impact side and the groove (11 b) at the acoustic side, is smaller than the angle (a) between impact side and the straight line.

7. Wheel arch liner according to claim 6 wherein the impact side has an angle (a) between 65 and 90 degrees, preferable between 70 and 80 degrees.

8. Wheel arch liner according to claim 6 wherein the fibrous layer has a higher density (kg/m³) at the impact sides compared to the fibrous layer at the acoustic sides.

9. Wheel arch liner according to any of the preceding claims, wherein the porous fibrous layer has a thickness between 1 and 8 mm, preferably between 1.2 and 5 mm, preferably between 1.5 and 4.5 mm.

10. Wheel arch liner according to any of the preceding claims, wherein the porous fibrous layer has an area weight between 200 and 1700 g.m⁻², preferably between 400 and 1500 g.m⁻², preferably between 500 and 1300 g.m⁻².

11. Wheel arch liner according to any of the preceding claims, wherein the wheel arch liner has at least one hinge in the form of at least one folding line.

12. Wheel arch liner according to any of the preceding claims, wherein the porous fibrous layer comprises filaments or fibres and a thermoplastic binder.

13. Wheel arch liner according to claim 12, wherein the filaments or fibres are at least one of mineral fibres or thermoplastic fibres selected from the group consisting of polyester fibres, preferably polyethylene-terephthalate (PET), polybutylene terephthalate (PBT), glass fibres and basalt fibres, or the fibres or filaments are a mixture of such fibres or filaments.

14. Wheel arch liner according to claim 12 or 13, wherein the thermoplastic binder is selected from the group consisting of a copolymer of polyester, a polypropylene, and a polyamide, preferably polyamide-6 or polyamide-66.

15. Wheel arch liner according to any of the preceding claims wherein the wheel arch liner further comprises a scrim, film or foil.
